# FASCICULE DE BREVET EUROPEEN

(11) **EP 1 535 783 B1**
(45) Date de publication et mention de la délivrance du brevet: **13.06.2007**
(21) Numéro de dépôt: 04292709.5
(22) Date de dépôt: 16.11.2004
(51) Int. Cl.: B60J 10/04

(54) **Joints comportant au moins une lèvre souple destinée à être en contact avec une vitre coulissante d'un véhicule automobile**
Dichtungen bestehend aus mindestens einer elastischen, verformbaren Lippe für den Kontakt mit einer bewegbaren Kraftfahrzeugfensterscheibe
Sealing consisting of at least one elastically deformable lip for contact with a movable window pane of a motor vehicle

(30) Priorité: 27.11.2003 FR 0313922
(43) Date de publication de la demande: 01.06.2005
(73) Titulaire: Metzeler Automotive Profile Systems Transieres, 92000 Nanterre (FR)
(72) Inventeur: Dron, Bernard, 92800 Puteaux (FR)
(74) Mandataire: Jolly, Jean-Pierre

(56) Documents cités:
- EP-A- 0 390 568
- DE-A- 4 035 658
- DE-A- 4 425 036
- US-A- 5 489 461
- US-B1- 6 286 841

## Description

La présente invention concerne les joints comportant une lèvre souple destinée à venir en contact avec une vitre coulissante d'un véhicule automobile. Elle concerne plus particulièrement des perfectionnements apportés aux lèvres de tels joints, en vue de réduire les bruits résultant du frottement sur la vitre de la ou des lèvres à son contact, lors des mouvements de cette vitre.

Ces joints, du type lécheur, coulisse, ou joint de porte pour des coupés, des cabriolets ou des voitures à porte sans cadre, comportent une ou des lèvres en contact avec au moins une face de la vitre mobile avec laquelle ils coopèrent.

En coupe transversale, le corps du joint comporte habituellement un corps ayant une section transversale en forme de U, qui coiffe une partie saillante de l'encadrement de vitre, la ou les lèvres qu'il comporte étant attenantes à une branche du U ou à une partie attenante à ce corps. Le corps du joint est habituellement en un élastomère ou en un plastomère tel que le polypropylène, généralement dur ou renforcé d'une armature, tandis que la ou les lèvres souples sont en un matériau élastiquement déformable, par exemple un élastomère ou un plastomère. Le corps et la ou les lèvres du joint sont généralement réalisés par co-extrusion.

Pour résister aux mouvements répétés et faciliter le coulissement de la vitre au contact de la ou des lèvres du joint, la surface de ces lèvres léchant une face de la vitre sont habituellement revêtues d'un revêtement glissant, mais ce film est généralement très dur et son contact avec la vitre, au cours des mouvements de celle-ci, produit des bruits gênants très désagréables à l'oreille à l'intérieur de l'habitacle du véhicule, voire même des chocs répétés si la vitre est légèrement entrebâillée.

On souhaite donc pouvoir disposer, dans la technique, d'un moyen facile à mettre en oeuvre et peu coûteux pour remédier à cet inconvénient.

C'est ce problème que se propose de résoudre la présente invention.

A cet effet, elle a pour objet un joint comportant au moins une lèvre souple destinée à être en contact avec une vitre coulissante d'un véhicule automobile par une surface revêtue d'un film d'un matériau dur à bas coefficient de friction, ce joint étant caractérisé en ce que, entre la lèvre et le matériau dur à bas coefficient de friction est interposée, de manière à les séparer pratiquement complètement, une couche d'un plastomère cellulaire ou d'un élastomère cellulaire compatible avec le matériau dur à bas coefficient de friction, avec lequel cette couche est co-extrudée.

La Demanderesse a établi, en effet, que l'utilisation d'une couche d'un tel matériau cellulaire réduit considérablement la transmission des bruits résultant des vibrations de la lèvre, lorsque la vitre avec laquelle elle est en contact se déplace ou, entrebâillée, vibre sous les effets de la route et de la carrosserie.

Dans la pratique, le bruit transmis à l'intérieur de l'habitacle est très atténué et plus sourd qu'usuellement et, par conséquent, beaucoup moins gênant pour le conducteur et les passagers du véhicule. Dans certaines conditions, ce bruit peut même complètement disparaître.

On a certes déjà proposé, dans US 6 286 841 Bi, un joint d'étanchéité destiné à venir en contact avec une plaque de verre mobile, ce joint comprenant une base 20 en élastomère et une couche superficielle 50 qui vient au contact de la plaque de verre. Entre ces deux parties du joint est interposée une couche-réservoir spongieuse en un matériau à cellules ouvertes, qui contient un adhésif 40, mais cet élément de fixation complique la réalisation du joint et en diminue la souplesse.

On connaît aussi, par DE 40 35 658 A, qui divulgue un join selon le préambule de la revendication 1, une lèvre 2 de joint, comportant une couche superficielle 5 en polytétrafluoroéthylène (qui est un matériau glissant difficilement sur le verre), une couche 3 d'une matière plastique expansée et une base 1, mais, comme le polytétrafluoroéthylène est bien connu pour son absence d'adhérence à la plupart des matériaux, une couche intermédiaire 6 d'un matériau adhésif doit ici aussi être interposée entre le polytétrafluoroéthylène et la matière plastique expansée.

Le joint conforme à l'invention élimine ces inconvénients.

Dans ce joint, le matériau cellulaire utilisé pour réaliser la couche interposée entre la lèvre proprement dite et le revêtement glissant à bas coefficient de friction dont elle est équipée en vue de ne pas gêner les mouvements de la vitre peut être un élastomère, tel qu'un E.P.D.M. ou un plastomère, par exemple un T.P.V. (Thermoplastique en Partie Vulcanisé).

Cet élastomère ou ce plastomère cellulaire peut être venu de fabrication avec le corps du joint et la lèvre qui l'équipe, par exemple par co-extrusion avec ceux-ci, ou être fabriqué séparément avec le revêtement glissant et positionné ensuite sur la lèvre, par exemple par clippage.

Les dessins annexés illustrent, à titre d'exemple, ces deux formes de réalisation d'un joint à lèvre souple conforme à l'invention. Sur ces dessins :
La figure 1 est une coupe transversale d'un lécheur de vitre réalisé par co-extrusion de ses constituants ;
La figure 2 est une coupe transversale d'un autre lécheur de vitre, dont les constituants sont fabriqués séparément et assemblés par clippage.

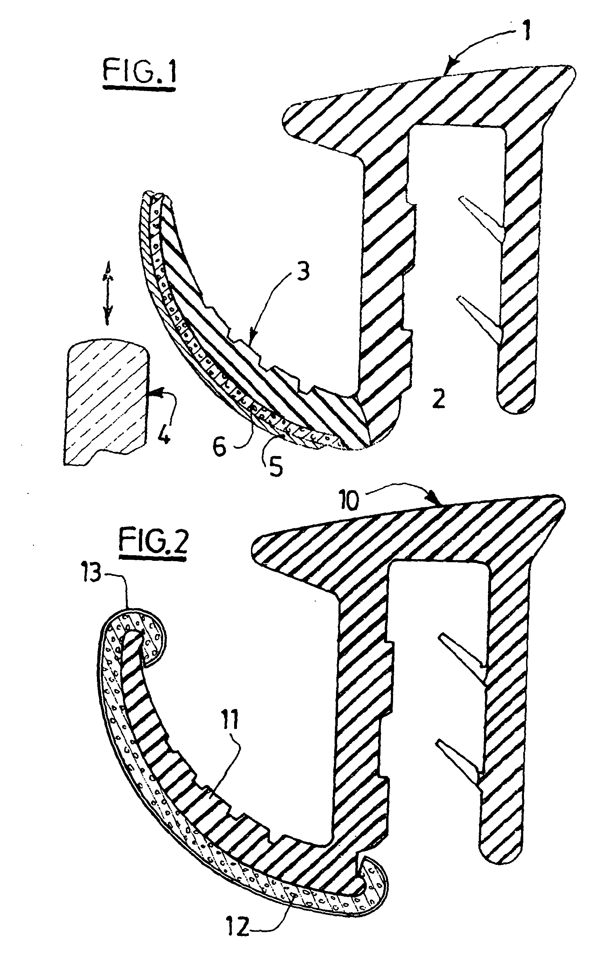

Le joint représenté sur la figure 1 comprend un profilé 1 à section transversale en U, en E.P.D.M. d'une dureté supérieure à 90 Shore A, destiné à coiffer une feuillure d'un panneau de porte.

A une extrémité d'une branche 2 du profilé 1 est attenante une lèvre souple 3, en E.P.D.M. ou en T.P.V., apte à s'escamoter au passage d'une vitre coulissante 4, dont elle lèche la face tournée vers elle.

Afin de faciliter le glissement de la vitre 4 contre la lèvre 3, celle-ci est habituellement revêtue sur sa surface tournée vers la vitre d'une pellicule 5 d'un vernis dur à faible coefficient de friction et les chocs de ce vernis contre la vitre 4, sous l'effet des vibrations de la lèvre 3 ou de la vitre, lorsque celle-ci se déplace, se traduisent habituellement par des bruits désagréables à l'intérieur du véhicule.

Pour atténuer ces bruits et même les supprimer, conformément à l'invention, une mince couche 6 d'E.P.D.M. cellulaire ou de T.P.V. cellulaire est interposée entre la lèvre 3 et la pellicule 5, de manière à les séparer complètement, ce qui amortit considérablement la transmission des ondes sonores dues au frottement mutuel du vernis 5 et de la vitre 4.

La pellicule 6 d'E.P.D.M. ou de T.P.V. (Thermoplastique en Partie Vulcanisé) cellulaire a une très faible épaisseur et elle peut être venue d'extrusion avec le profilé 1 et la lèvre 3, de sorte que le surcoût dû à cette pellicule est pratiquement négligeable.

Dans la réalisation de la figure 2, on retrouve un corps de lécheur constitué par un profilé en E.P.D.M. 10, à section en U, à laquelle est attenante une lèvre 11 en le même matériau et venue d'extrusion avec le corps 10.

Sur la surface de la lèvre 11 tournée vers l'extérieur est rapporté un élément 12 en E.P.D.M. cellulaire fabriqué séparément et auquel adhère une mince couche 13 de vernis glissant.

L'élément 12 est clippé transversalement sur la lèvre 11, dont il est ainsi solidaire.

Les lèvres d'une coulisse pour encadrement de vitre peuvent naturellement être adaptées de la même manière que celles qui viennent d'être décrites à propos d'un lécheur, avec les mêmes avantages.

## Revendications

1. Joint comportant au moins une lèvre souple (3) destinée à être en contact avec une vitre coulissante (4) d'un véhicule automobile par une surface revêtue d'un film (5) d'un matériau dur à bas coefficient de friction, où entre la lèvre (3) et le matériau dur (5) à bas coefficient de friction, est interposée, de manière à les séparer pratiquement complètement, une couche (6) d'un plastomère cellulaire ou d'un élastomère cellulaire, **caractérisé en ce que** ledit plastomère cellulaire ou l'élastomère cellulaire est compatible avec le matériau dur à bas coefficient de friction, et **en ce que** la couche (6) et le matériau (5) sont co-extrudés.

2. Joint selon la revendication 1, **caractérisé en ce que** le matériau cellulaire dont est constituée la couche (6) en matériau cellulaire est un E.P.D.M. ou un T.P.V..

3. Joint selon l'une des revendications 1 et 2, **caractérisé en ce que** le corps (1) du joint et la lèvre (3) sont co-extrudés avec la couche (6) en un plastomère cellulaire ou en élastomère cellulaire et le film (5) en matériau dur à bas coefficient de friction.

4. Joint selon l'une des revendications 1 et 2, **caractérisé en ce que** la couche de plastomère cellulaire ou d'élastomère cellulaire est réalisée avec le film (13) de matériau dur à bas coefficient de friction qu'elle supporte, séparément du corps (10) du joint et de la lèvre (13), sous la forme d'un élément (12) apte à être clippé transversalement sur la lèvre (13).

5. Joint selon l'une des revendications 1 à 3, **caractérisé en ce qu**'il est constitué par un lécheur ou une coulisse pour vitre coulissante.

## Claims

1. Seal comprising at least one flexible lip (3) for contact with a sliding window pane (4) of a motor vehicle via a surface coated with a film (5) of a hard material with a low coefficient of friction, where there is interposed between the lip (3) and the hard material (5) with a low coefficient of friction, in such a way as to separate them almost completely, a layer (6) of a foam plastomer or foam elastomer, which seal is **characterized in that** the said foam plastomer or foam elastomer is compatible with the hard material with a low coefficient of friction, and **in that** the layer (6) and the material (5) are coextruded.

2. Seal according to Claim 1, **characterized in that** the foam material of the layer (6) of foam material is an EPDM or a TPV.

3. Seal according to either of Claims 1 and 2, **characterized in that** the body (1) of the seal and the lip (3) are coextruded with the layer (6) of foam plastomer or foam elastomer and the film (5) of hard material with a low coefficient of friction.

4. Seal according to either of Claims 1 and 2, **characterized in that** the layer of foam plastomer or foam elastomer is made with the film (13) of hard material with a low coefficient of friction which it supports, separately from the body (10) of the seal and from the lip (3), in the form of a component (12) able to be clipped transversely onto the lip (3).

5. Seal according to one of Claims 1 to 3, **characterized in that** it consists of a window sealing strip or a channel for a sliding window.

## Patentansprüche

1. Dichtung mit wenigstens einer weichen Lippe (3) zum Anlegen an eine bewegliche Fensterscheibe (4) eines Kraftfahrzeugs mittels einer Oberfläche, die mit einem Film (5) aus einem harten Material mit einem niedrigen Reibungskoeffizienten überzogen ist, wobei zwischen der Lippe (3) und dem harten Material (5) mit niedrigem Reibungskoeffizienten eine Schicht (6) aus einem Plastomer- oder Elastomerschaum so eingeschoben ist, dass sie diese im Wesentlichen vollständig trennt, **dadurch gekennzeichnet, dass** der Plastomer- oder Elastomerschaum zu dem harten Material mit niedrigem Reibungskoeffizienten kompatibel ist und dass die Schicht (6) und das Material (5) koextrudiert sind.

2. Dichtung nach Anspruch 1, **dadurch gekennzeichnet, dass** das Schaumstoffmaterial, aus dem die Schicht (6) aus Schaumstoffmaterial gebildet ist, ein E.P.D.M. oder ein T.P.V. ist.

3. Dichtung nach einem der Ansprüche 1 und 2, **dadurch gekennzeichnet, dass** der Körper (1) der Dichtung und die Lippe (3) mit der Schicht (6) aus einem Plastomer- oder Elastomerschaum und dem Film (5) aus einem harten Material mit niedrigem Reibungskoeffizienten koextrudiert sind.

4. Dichtung nach einem der Ansprüche 1 und 2, **dadurch gekennzeichnet, dass** die Schicht aus Plastomer- oder Elastomerschaum mit dem Film (13) aus hartem Material mit einem niedrigen Reibungskoeffizienten, den sie abstützt, in Form eines Elements (12), das transversal auf die Lippe (13) klipsbar ist, getrennt von dem Körper (10) und der Lippe (13) ausgebildet ist.

5. Dichtung nach einem der Ansprüche 1 bis 3, **dadurch gekennzeichnet, dass** sie als Dichtlippe oder Abzieher oder als Führung für bewegliche Fensterscheiben ausgebildet ist.
